# EUROPEAN PATENT SPECIFICATION

(11) **EP 1 944 344 B1**
(45) Date of publication and mention of the grant of the patent: **28.03.2012**
(21) Application number: 07107203.7
(22) Date of filing: 30.04.2007
(51) Int. Cl.: C09D 133/08

(54) **Resin composition for plastic coating and plastic coating using the same**
Harzzusammensetzung zur Kunststoffbeschichtung und Kunststoffbeschichtung damit
Composition de résine pour revêtement plastique et revêtement en plastique l'utilisant

(30) Priority: 15.01.2007 JP 2007005651
(43) Date of publication of application: 16.07.2008
(73) Proprietor: SHOWA DENKO KABUSHIKI KAISHA, Minato-ku Tokyo 105-0012 (JP)
(72) Inventor: Uchida, Jiro c/o Showa Highpolymer Co., Ltd, Tatsuno-shi, Hyogo (JP); Nakagawa, Yasuhiro c/o Showa Highpolymer Co., Ltd, Tatsuno-shi, Hyogo (JP); Araki, Motoaki c/o Showa Highpolymer Co., Ltd, Tatsuno-shi, Hyogo (JP)
(74) Representative: Gille Hrabal

(56) References cited:
- US-A- 4 507 342

## Description

### BACKGROUND OF THE INVENTION

### 1. Field of the Invention

The present invention relates to the use of a resin composition for obtaining a plastic coating to be applied to a plastic surface of a cell phone, electric appliances, office automation equipment, or the like, and to a plastic coating using the same.

### 2. Description of the Related Art

A plastic coating is a coating which is to be applied to a plastic surface and which is intended to impart decorative property and functionality for improving a commercial value of a plastic molded product such as a cell phone, electric appliances, or office automation equipment. Specifically, application of the plastic coating can impart multicolor finish, appearance, and texture to a surface of a plastic molded product having no such properties, and can impart resistance properties such as abrasion resistance, discoloration resistance, oil resistance, high gloss property, high weather ability, and electrical insulating property from a functional aspect.

The plastic coating is generally formed of a resin, a colorant, an additive, and a medium. The plastic coating generally has a resin form containing an acrylic resin as a main component, and is roughly classified into a one-part acryl lacquer-based coating and a two-part acryl urethane-based coating. Most of the plastic coatings currently used are each a solvent-based coating containing a medium of an organic-based solvent. In the case where such a plastic coating is used, a large amount of the organic solvent scatters during application and drying, and thus the coating is not necessarily a coating with environmental compatibility.

As a measure for attaining environmental compatibility, a high-solid coating and a water-based coating employing a water-based emulsion as a coating resin have been developed. Of those, use of a water-based emulsion as a coating resin involves no use of a volatile organic solvent at all and is a resin form drawing attention the most.

However,a water-based plastic coating employing a water-based emulsion has degraded wetness and permeability on a surface of a plastic molded product compared with those of a solvent-based coating. Further, the water-based plastic coatings have problems in adhesiveness to aplastic material, and hot water adhesion resistance and hot water whitening resistance because the resin form is a water-based emulsion. Application of the plastic coating formed of a water-based emulsion to a plastic surface provides a problem of degraded gloss on an applied surface compared with that of a solvent-based coating.

As a method of solving those problems, there is disclosed a water-based emulsion having an average particle size of 500 nm or less and containing emulsion particles having a crosslinked structure for improving transparency and water resistance of a plastic coating (see JP 02-73803 A).

However, this method provides insufficient gloss and provides problems in adhesiveness to all plastic materials.

Further, there is disclosed a water-based emulsion obtained by forming fine particles of the water-based emulsion by using a reactive emulsifier for improving adhesiveness to a plastic substrate (see JP 06-116528 A).

This method also provides problems in gloss and adhesiveness to all plastic materials.

Further, there is disclosed a water-based emulsion obtained by using as a dispersion stabilizer a water-soluble polymer having a weight average molecular weight of 2,000 or more and having an alcoholic hydroxide group for improving water resistance and adhesiveness to a plastic substrate (see JP 2001-152076 A).

However, this method provides problems in adhesiveness to all plastic materials.

Ingeneral, as a material to be used for a plastic moldedproduct such as a cell phone, electric appliances, or office automation equipment, an acrylonitrile/butadiene/styrene resin (ABS resin), ABS/a polycarbonate resin (ABS/PC resin), or a polystyrene resin (PS resin) is mainly used. Of the plastic coatings each employing as a coating resin the water-based emulsion obtained by the method described above and studied so far, no coating satisfying high adhesiveness to all materials, hot water adhesion resistance, and hot water whitening resistance has been found. At present, a solvent-based paint is predominantly used even though its use involves environmental problems.

### SUMMARY OF THE INVENTION

An object of the present invention is to provide a resin composition for plastic coating having high gloss, excellent adhesiveness to any plastic molded product formed of an ABS resin, ABS/PC resin, or PS resin material, hot water adhesion resistance, and hot water whitening resistance and containing as a coating resin component a water-based emulsion, and a plastic coating using the resin composition for plastic coating.

The inventors of the present invention have conducted extensive studies for attaining the object to provide a resin composition for plastic coating having high gloss, excellent adhesiveness to any plastic molded product formed of an ABS resin, ABS/PC resin, or PS resin material, hot water adhesion resistance, and hot water whitening resistance and containing as a coating resin component a water-based emulsion, and a plastic coating using the resin composition for plastic coating. As a result, the inventors of the present invention have found that a plastic coating having high gloss, excellent adhesiveness to any plastic molded product formed of anABS resin, ABS/PC resin, or PS resinmaterial, hot water adhesion resistance, and hot water whitening resistance can be obtained by using a resin composition for plastic coating containing as a resin component a water-based emulsion obtained through emulsion polymerization of a specific amount of an ethylenic unsaturated monomer containing cyclohexyl (meth)acrylate as an essential ingredient in the presence of a surfactant and having a glass transition temperature of 50°C or higher. Thus, the inventors of the present invention have completed the present invention based on the findings.

That is, the present invention provides:
(1) use of a resin composition comprising as a resin component a water-based emulsion obtained through emulsion polymerization of an ethylenic unsaturated monomer containing as an essential ingredient cyclohexyl (meth)acrylate in the presence of a surfactant and having a glass transition temperature of 50°C or higher,
   for plastic coating of a plastic substrate formed of an ABS resin, an ABS/PC resin or a PS resin material;
(2) the use according to the above-mentioned item (1), wherein the water-based emulsion has an average particle size of 200 nm or less;
(3) the use according to the above-mentioned item (1) or (2), wherein the cyclohexyl (methacrylate is included in an amount of 10 to 70 mass% with respect to a total amount of the ethylenic unsaturated monomer;
(4) the use according to any one of the above-mentioned items (1) to (3), wherein the ethylenic unsaturated monomer comprises an unsaturated carboxylic acid and glycidyl (meth) acrylate;
(5) the use according to any one of the above-mentioned items (1) to (4), wherein the surfactant comprises a radical polymerizable surfactant.

According to the present invention, there is provided the use of a resin composition for plastic coating having high gloss, excellent adhesiveness to any plastic molded product formed of an ABS resin, ABS/PC resin, or PS resin material, hot water adhesion resistance, and hot water whitening resistance and containing as a coating resin component a water-based emulsion, and a plastic coating using the resin composition for plastic coating.

### DETAILED DESCRIPTION OF THE INVENTION

Hereinafter, the present invention will be described more specifically.

A reason for use of cyclohexyl (meth) acrylate as an essential ingredient in the present invention is to develop excellent adhesiveness to any plastic molded product formed of an ABS resin, ABS/PC resin, or PS resin material. Cyclohexyl acrylate or cyclohexyl methacrylate may be used alone or used in combination. Note that cyclohexyl (meth) acrylate represents cyclohexyl acrylate or cyclohexyl methacrylate.

Examples of the ethylenically unsaturated monomer other than cyclohexyl (meth)acrylate used in the present invention include: (meth)acrylic acid esters such as methyl (meth)acrylate, ethyl (meth)acrylate, n-propyl (meth)acrylate, isopropyl (meth)acrylate, n-butyl (meth)acrylate, iso-butyl (meth)acrylate, tert-butyl (meth)acrylate, 2-ethylhexyl (meth)acrylate, lauryl (meth) acrylate, and stearyl (meth) acrylate; styrene; vinyl acetate; and vinyl propionate. In addition, for improving emulsion polymerization stability or mechanical stability of an aqueous emulsion to be obtained, examples of the ethylenically unsaturated monomer include 2-hydroxyalkyl (meth)acrylates such as 2-hydroxyethyl (meth)acrylate and 2-hydroxypropyl (meth)acrylate, (meth)acrylamide, N-methylol (meth)acrylamide, (meth)acrylonitrile, glycidyl acrylate, and glycidyl methacrylate. Examples of the unsaturated carboxylic acid include unsaturated monocarboxylic acids such as acrylic acid, methacrylic acid, and crotonic acid; and unsaturated dicarboxylic acids such as maleic acid, fumaric acid, and itaconic acid or half esters of those unsaturated dicarboxylic acids.

Further, for improving solvent resistance of a water-based emulsion to be obtained, a crosslinking polyfunctional monomer having two or more unsaturated groups such as divinyl benzene and ethylene glycol di (meth) acrylate, for adjusting a molecular weight, mercaptan, thioglycolic acid and an ester thereof, β -mercaptopropionic acid and an ester thereof, and the like may be used.

A glass transition temperature (Tg) of the water-based emulsion used in the present invention must be 50°C or higher. A transition temperature thereof of lower than 50°C provides low hardness to a film formed by applying a plastic coating and provides problems in adhesiveness to a plastic material, hot water adhesion resistance, abrasion resistance, and scratch resistance.

Examples of a surfactant to be used during emulsion polymerization for obtaining the resin component used in the present invention include a normal anionic surfactant and a normal nonionic surfactant. Examples of the anionic surfactant include alkylbenzene sulfonic acid salt, alkyl sulfate ester salt, and polyoxyethylene alkyl ether sulfate ester salt. Examples of the nonionic surfactant include polyoxyethylene alkyl ether, polyoxyethylene alkylphenyl ether, and polyoxyalkylene alkyl ether.

A radical polymerizable surfactant is not particularly limited as long as it is reactive. More preferred examples of the radical polymerizable surfactant include emulsifiers represented by the following general formulae (1), (2) and (3). 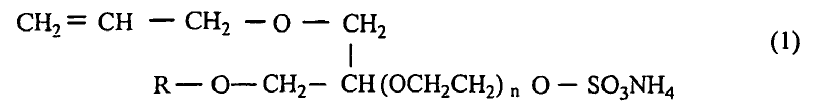 (R represents an alkyl group.) 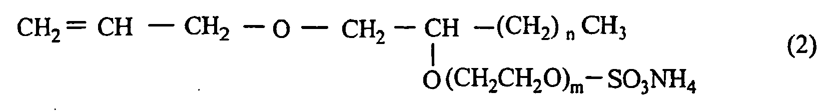 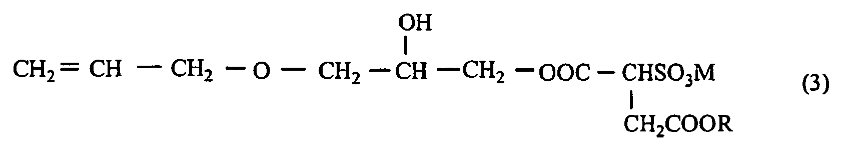 (R represents an alkyl group; and M represents NH₄ or Na.)

A use amount of the surfactant is preferably 0.3 to 3 mass% with respect to the total mass of the unsaturated monomer mixture. A use amount of the surfactant within the above range allows smooth emulsion polymerization, prevents increase in particle size of the obtained water -based emulsion, provides favorable hot water adhesion resistance, hot water whitening resistance, and gloss after application of the plastic coating, prevents degradation of hot water adhesion resistance of a resin, and provides favorable hot water adhesion resistance to a plastic coating.

Examples of a radical polymerization initiator to be used in emulsion polymerization include ammonium persulfate, potassium persulfate, hydrogen peroxide, and t-butyl hydroperoxide. A redox-based polymerization initiator employing a reducing agent such as sodium bisulfite, rongalite, or ascorbic acid may be used as required.

An emulsion polymerization method to obtain the water-based emulsion used in the present invention employs a polymerization method involving charging at once and a polymerization method involving continuous supply of respective components. Polymerization is generally conducted at a temperature of 30 to 90°C under stirring. Note that a basic substance is added during or after polymerization of an unsaturated carboxylic acid copolymerized in the present invention to adjust pH, to thereby improve polymerization stability during emulsion polymerization, mechanical stability, and chemical stability. Further, in the case where a film forming agent is added in production of a plastic coating, assistant mixing property can be significantly improved. In this case, the pH of the water-based emulsion to be obtained is preferably adjusted to 7 or more.

Examples of the basic substance to be used include ammonia, ethylamine, ethanolamine, and sodium hydroxide.

The plastic coating is obtained by adding a film forming agent and a colorant to a resin composition for plastic coating formed of the water-based emulsion described above. A leveling agent, an antifoaming agent, a preservative, a UV absorber for improving weatherability, a light stabilizer, and the like may be added as required.

### Examples

Hereinafter, the present invention will be described more specifically by using examples, but the present invention is not completely limited by the following examples. All modifications carried out without departing from the scope of the invention are included in a technical range of the present invention. Note that parts and % represent parts by mass and mass%, respectively unless otherwise noted.

Hereinafter, description will be given of a performance evaluation testing method of a plastic coating obtained in the present invention.

### (1) Particle size of water-based emulsion

An average particle size of a water-based emulsion obtained through emulsion polymerization was measured by using MICROTRAC UPA150 manufactured by NIKKISO Co., Ltd.

### (2) Gloss

The plastic coating obtained as described below was applied in a wet state to an ABS substrate as a plastic material in an amount of 50 g/m². The whole was dried at 60°C for 30 minutes under heating, and left standing at 23°C in 65% RH for 24 hours, to thereby prepare a test piece . The gloss was measured by using Digital Variable Gloss Meter UGV-5D manufactured by Suga Test Instruments Co., Ltd. The gloss was evaluated based on the following criteria.
AA: gloss, BB: slightly degraded gloss, CC: degraded gloss

### (3) Primary adhesiveness

The plastic coating obtained as described below was applied in a wet state to each plastic material in an amount of 50 g/m². The whole was dried at 60°C for 30 minutes under heating, and left standing at 23°C in 65% RH for 24 hours, to thereby prepare a test piece. The primary adhesiveness was measured by conducting a Sellotape (registered trademark) peeling test of 100 grids of 1 mm square in accordance with JIS K-5400. The number of non-peeled grids was counted, and the primary adhesiveness was evaluated based on the following criteria.
AA: 90</100, BB: 50-90/100, CC: 50>/100

### (4) Hot water adhesion resistance

The same test piece as that used in the primary adhesiveness test was immersed in hot water at 50°C for 5 hours, and then a peeling test was conducted in the same manner as for the primary adhesiveness. The number of non-peeled grids was counted, and the hot water adhesion resistance was evaluated based on the following criteria.
AA: 90</100, BB: 50-90/100, CC: 50>/100

### (5) Hot water whitening resistance

The same test piece as that used in the primary adhesiveness test was immersed in hot water at 50°C for 5 hours. Appearance of the test piece was observed, and the hot water whitening resistance was evaluated based on the following criteria.
AA: no change, BB: slight change (whitening), CC: change (whitening)

### (I) Synthesis of various water-based emulsions to be used in Examples

### (1) Synthesis of water-based emulsion A

Into a separable flask having a condenser, a thermometer, a stirrer, and a dropping funnel, 180 parts of ion-exchanged water and 2 parts of LEVENOL WX (available from Kao Corporation) as a surfactant were charged, and the whole was heated to 75°C. A monomer emulsified product containing 5 parts of LEVENOL WX, 170 parts of cyclohexyl methacrylate, 180 parts of styrene, 85 parts of methyl methacrylate, 10 parts of methacrylic acid, and 200 parts of ion-exchanged water was dropped over 3 hours. At the same time, a solution containing 1 part of ammonium persulfate as a polymerization initiator dissolved in 60 parts of ion-exchanged water was dropped at 80°C over 3 hours for polymerization. After completion of the dropping, the resultant was aged for 2 hours and cooled. 3 parts of ammonia water was added thereto, to thereby obtain a water-based emulsion.

The obtained water-based emulsion had a non-volatile content of 50.5%, a viscosity of 4,000 mPa·s, and a pH of 8.6.

### (2) Synthesis of water-based emulsion B

An operation was conducted in the same manner as in the synthesis of water-based emulsion A except that the surfactant was changed from LEVENOL WX to ADEKA REASOAP SR-10 (available from Adeka Corporation). The obtained water-based emulsion had a non-volatile content of 50.4%, a viscosity of 3,500 mPa·s, and a pH of 8.3.

### (3) Synthesis of water-based emulsion C

An operation was conducted in the same manner as in the synthesis of water-based emulsion B except that 170 parts of cyclohexyl methacrylate and 180 parts of styrene were changed to 120 parts of cyclohexyl methacrylate and 230 parts of styrene. The obtained water-emulsion had a non-volatile content of 50.2%, a viscosity of 5,500 mPa·s, and a pH of 8.4.

### (4) Synthesis of water-based emulsion D

An operation was conducted in the same manner as in the synthesis of water-based emulsion B except that 170 parts of cyclohexyl methacrylate and 180 parts of styrene were changed to 220 parts of cyclohexyl methacrylate and 130 parts of styrene. The obtained water-emulsion had a non-volatile content of 50.3%, a viscosity of 2,000 mPa·s, and a pH of 8.5.

### (5) Synthesis of water-based emulsion E

An operation was conducted in the same manner as in the synthesis of water-based emulsion B except that 170 parts of cyclohexyl methacrylate was changed to 90 parts of cyclohexyl methacrylate and 80 parts of cyclohexyl acrylate. The obtained water-emulsion had a non-volatile content of 50.4%, a viscosity of 2,500 mPa·s, and a pH of 8.4.

### (6) Synthesis of water-based emulsion F

An operation was conducted in the same manner as in the synthesis of water-based emulsion B except that 180 parts of styrene was changed to 130 parts of styrene and 50 parts of butyl acrylate. The obtained emulsion had a non-volatile content of 50 . 5%, a viscosity of 3,000 mPa·s, and a pH of 8.4.

### (7) Synthesis of water-based emulsion G

An operation was conducted in the same manner as in the synthesis of water-based emulsion B except that 85 parts of methyl (meth)acrylate was changed to 70 parts of methyl (meth)acrylate and 15 parts of glycidyl (meth) acrylate. The obtained emulsion had a non-volatile content of 50.0%, a viscosity of 4,500 mPa·s, and a pH of 8.0.

Detailed description will be given of a method of producing a plastic coating using the obtained water-based emulsion.

### Example 1

To 100 parts of the water-based emulsion A, 15 parts of (2,2,4-trimethyl-1,3-pentanediol monoisobutyrate) as a film forming agent, 5 parts of a colorant, 0.1 part of an antifoaming agent, 0.1 part of a preservative, and an appropriate amount of viscosity adjusting water were added, to thereby obtain a plastic coating. Table 1 shows evaluation results of the obtained plastic coating.

### Examples 2 to 7

An operation was conducted in the same manner as in Example 1 except that each of the water-based emulsions B to G was used, to thereby obtain a plastic coating. Table 1 shows the evaluation results of the obtained plastic coatings.

### (II) Synthesis of various water-based emulsions to be used in Comparative Examples

### (1) Synthesis of water-based emulsion H

Into a separable flask having a condenser, a thermometer, a stirrer, and a dropping funnel, 180 parts of ion-exchanged water and 2 parts of LEVENOL WX (available from Kao Corporation) were charged, and the whole was heated to 75°C. A monomer emulsified product containing 5 parts of LEVENOL WX, 350 parts of styrene, 85 parts of methyl methacrylate, 10 parts of methacrylic acid, and 200 parts of ion-exchanged water was dropped over 3 hours. At the same time, a solution containing 1 part of ammonium persulfate as a polymerization initiator dissolved in 60 parts of ion-exchanged water was dropped at 80°C over 3 hours for polymerization. After completion of the dropping, the resultant was aged for 2 hours and cooled. 3 parts of ammonia water was added thereto, to thereby obtain a water-based emulsion.

The obtained water-based emulsion had a non-volatile content of 50.5%, a viscosity of 7,000 mPa·s, and a pH of 8.5.

### (2) Synthesis of water-based emulsion I

An operation was conducted in the same manner as in the synthesis of water-based emulsion B except that 180 parts of styrene was changed to 70 parts of styrene and 110 parts of butyl acrylate. The obtained water-based emulsion had a non-volatile content of 50.3 %, a viscosity of 2,500 mPa·s, and a pH of 8.5.

### Comparative Example 1

To 100 parts of the water-based emulsion H, 15 parts of (2,2,4-trimethyl-1,3-pentanediol monoisobutyrate) as a film forming agent, 5 parts of a colorant, 0.1 part of an antifoaming agent, 0.1 part of a preservative, and an appropriate amount of viscosity adjusting water were added, to thereby obtain a plastic coating. Table 1 shows the evaluation results of the obtainedplastic coating.

### Comparative Example 2

An operation was conducted in the same manner as in Comparative Example 1 except that each of the water-based emulsion I was used, to thereby obtain a plastic coating. Table 1 shows the evaluation results of the obtained plastic coatings.

**Table 1.**

| | Resin composition for plastic coating | | | | Calculated Tg °C | Average particle size nm | Gloss | Primary adhesiveness (material) | | | Hot water adhesion resistance | Hot water whitening resistance |
|---|---|---|---|---|---|---|---|---|---|---|---|---|
| | Water-based emulsion | Non-volatile content % | Viscosity mPa·s | pH | | | | ABS | ABS/PC | PS | | |
| Example 1 | A | 50.5 | 4.000 | 8.6 | 96 | 120 | AA | AA | AA | AA | AA | AA |
| Example 2 | B | 50.4 | 3,500 | 8.3 | 96 | 130 | AA | AA | AA | AA | AA | AA |
| Example 3 | C | 50.2 | 5,500 | 8.4 | 98 | 150 | AA | AA | AA | AA | AA | AA |
| Example 4 | D | 50.3 | 2,000 | 8.5 | 94 | 120 | AA | AA | AA | AA | AA | AA |
| Example 5 | E | 50.4 | 2,500 | 8.4 | 78 | 130 | AA | AA | AA | AA | AA | AA |
| Example 6 | F | 50.5 | 3,000 | 8.4 | 70 | 170 | AA | AA | AA | AA | AA | AA |
| Example 7 | G | 50.0 | 4,500 | 8.0 | 93 | 140 | AA | AA | AA | AA | AA | AA |
| Comparative Example 1 | H | 50.5 | 7,000 | 8.5 | 103 | 130 | AA | BB | BB | AA | CC | AA |
| Comparative Example 2 | I | 50.3 | 2,500 | 8.5 | 43 | 140 | AA | BB | AA | AA | CC | AA |

The present invention can provide the use of a resin composition for a plastic coating containing as a resin component a water-based emulsion having Tg in a specific range and obtained through copolymerization of a specific monomer, and having high gloss, excellent adhesiveness to any plastic molded product formed of an ABS resin, ABS/PC resin, or PS resin material, hot water adhesion resistance, and hot water whitening resistance.

## Claims

1. Use of a resin composition comprising as a resin component a water-based emulsion obtained through emulsion polymerization of an ethylenic unsaturated monomer containing as an essential ingredient cyclohexyl (meth)acrylate in the presence of a surfactant and having a glass transition temperature of 50°C or higher, for plastic coating of a plastic substrate formed of an ABS resin, an ABS/PC resin or a PS resin material.

2. The use according to claim 1, wherein the water-based emulsion has an average particle size of 200 nm or less.

3. The use according to claim 1 or 2, wherein the cyclohexyl (meth)acrylate is included in an amount of 10 to 70 mass% with respect to a total amount of the ethylenic unsaturated monomer.

4. The use according to any one of claims 1 to 3, wherein the ethylenic unsaturated monomer comprises an unsaturated carboxylic acid and glycidyl (meth) acrylate.

5. The use according to any one of claims 1 to 4, wherein the surfactant comprises a radical polymerizable surfactant.

## Patentansprüche

1. Verwendung einer Harz-Zusammensetzung, enthaltend als Harzkomponente eine Wasser-basierte Emulsion, welche durch Emulsionspolymerisation eines ethylenisch ungesättigten Monomers, welches als wesentlichen Bestandteil Cyclohexyl(meth)acrylat enthält, in Gegenwart eines Tensids erhalten wird, und eine Glasübergangstemperatur von 50°C oder höher aufweist, zur Kunststoff-Beschichtung eines Kunststoff-Substrats welches aus einem ABS-Harz, einem ABS / PC-Harz oder einem PS Harzmaterial gebildet ist.

2. Verwendung nach Anspruch 1, worin die Wasser-basierte Emulsion eine durchschnittliche Partikelgröße von 200 nm oder weniger aufweist.

3. Verwendung nach Anspruch 1 oder 2, worin das Cyclohexyl(meth)acrylat in einer Menge von 10 bis 70 Massen-% bezogen auf die Gesamtmenge des ethylenisch ungesättigten Monomers enthalten ist.

4. Verwendung nach der Ansprüche 1 bis 3, worin das ethylenisch ungesättigte Monomer eine ungesättigte Carbonsäure und Glycidyl(meth)acrylat enthält.

5. Verwendung nach einem der Ansprüche 1 bis 4, worin das Tensid ein radikalisch polymerisierbares Tensid enthält.

## Revendications

1. Utilisation d'une composition de résine comprenant, comme composant de une émulsion à base d'eau obtenu par polymérisation en émulsion d'un monomère à insaturation éthylénique contenant, comme ingrédient essentiel, du (méth)acrylate de cyclohexyle en présence d'un agent tensioactif et ayant une température de transition vitreuse du 50 °C ou plus des revêtements plastiques d'un substrat plastique formé d'un matériau de résine de ABS, de résine ABS/PC ou de résine de

2. L'utilisation selon la revendication 1, dans laquelle l'émulsion à base d'eau a une taille moyenne de particule de 200 nm ou moins.

3. L'utilisation selon l'une des revendications 1 ou 2, dans laquelle le (méth)acrylate de cyclohexyle est indus dans un montant de 10 à 70 % en masse par rapport au montant total du monomère à insaturation éthylénique.

4. L'utilisation selon l'une des revendications 1 à 3, dans laquelle le monomère à insaturation éthylénique comprend un acide carboxylique insaturé et (méth)acrylate de glycidyle.

5. L'utilisation selon l'une des revendications 1 à 4, dans laquelle l'agent tensioactif comprend un agent tensioactif par voie radicalaire.
